# EUROPÄISCHE PATENTSCHRIFT

(11) **EP 2 052 555 B1**
(45) Veröffentlichungstag und Bekanntmachung des Hinweises auf die Patenterteilung: **07.05.2014**
(21) Anmeldenummer: 07764662.8
(22) Anmeldetag: 15.06.2007
(51) Int. Cl.: H04W 40/12, H04L 12/725

(54) **ROUTINGENTSCHEIDUNG IN MOBILEN IP-NETZEN**
ROUTING DECISION IN MOBILE IP NETWORKS
DÉCISION DE ROUTAGE DANS DES RÉSEAUX IP MOBILES

(30) Priorität: 15.08.2006 DE 102006038393
(43) Veröffentlichungstag der Anmeldung: 29.04.2009
(73) Patentinhaber: T-Mobile International AG, 53227 Bonn (DE)
(72) Erfinder: SCHNEIDER, Daniela, 1050 Wien (AT); NENNER, Karl-Heinz, 53332 Bornheim (DE)
(74) Vertreter: Riebling, Peter
(86) Internationale Anmeldenummer: PCT/EP2007/005285
(87) Internationale Veröffentlichungsnummer: WO 2008/019724

(56) Entgegenhaltungen:
- WO-A-03/067832
- WO-A-2004/025982
- US-A1- 2006 140 177

## Beschreibung

Die Erfindung betrifft ein Verfahren und ein Computerprogramm zum Routen von Verkehrsströmen in IP-Netzen, insbesondere in mobilen IP-Netzen unter Berücksichtigung von Qualitätskriterien.

Im Stand der Technik sind Kommunikationsnetzwerke, insbesondere Mobilfunknetze oder das Internet, zum Übertragen von Informationsinhalten an unterschiedliche Anwenderinstanzen grundsätzlich bekannt, ebenso die zugehörigen Endgeräte.

Für die nähere Betrachtung des Erfindungsumfeldes wird von folgendem Szenario ausgegangen:
■ Ein Endgerät hat einen "Kontext"/eine "Session" zu einem lokalen Netzzugangspunkt eines Paketdatennetzes.
■ Das Endgerät möchte mehrere Verkehrsströme zu einem oder mehreren externen Netzen (gleichzeitig oder nacheinander) aufbauen bzw. unterhalten, die unterschiedlich behandelt werden müssen ("extern" bezieht sich auf die Sicht des oben genannten Netzzugangspunktes). Die unterschiedliche Behandlung der Verkehrsströme kann auf Grund folgender Gegebenheiten notwendig sein:
   - Die Verkehrsströme haben unterschiedliche Zielnetze, z.B. ein Verkehrsstrom ins öffentliche Internet (lokaler Zugang), ein anderer in ein Firmennetz/ Servicenetz/ Internet Service Provider (externer Zugang).
   - Die QoS-Behandlung (QoS: Quality of Service - Dienstgüte) der Verkehrsströme ist (muss) unterschiedlich (sein), z.B. für Verkehrsstrom 1 reicht die Qos-Klasse 'Background-Class', für Verkehrstrom 2 wird die Qos-Klasse ,realtime-Class' benötigt.
   - Nationales und Internationales Roaming: z.B.: ein Verkehrsstrom wird über das Heimatnetz geroutet (externer Zugang), ein zweiter Verkehrsstrom kann bereits am lokalen Zugangspunkt in externe Netze geroutet werden.
■ Diese Unterscheidung der Verkehrströme kann z.B. auf folgenden Kriterien basieren:
   1. Unterschiede im IP-Header
   2. Unterschiede im Applikations-Header
   3. Unterschiede in der QoS-Behandlung
   4. unterschiedliche Inhalte (User-Daten)
   5. unterschiedliche Protokolle
   6. weitere Kriterien

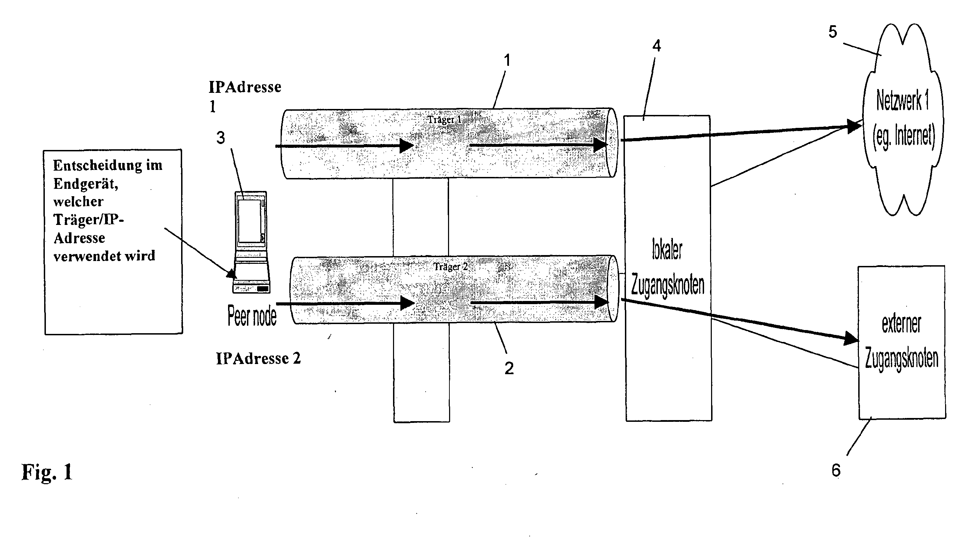

In Fig. 1 ist beispielhaft der Ablauf einer endgerätebasierten Routing-Entscheidung nach dem Stand der Technik dargestellt.
Nach dem Stand der Technik ist folgende Vorgehensweise gebräuchlich:
- Das Endgerät 3 bekommt für jeden zu unterscheidenden Verkehrsstrom eine IP-Adresse und einen eigenen Träger/Kontext 1, 2 zugewiesen. Das Zielnetz für die Verkehrsströme ist dabei ein Parameter eines Kontextes und kann für jeden Kontext unterschiedlich sein.
- Der lokale Zugangsknoten 4 im mobilen Netz routet den Verkehr entsprechend des benutzen Trägers/Kontexts zum jeweiligen Zielnetz 5, 6. Z. B. Verkehr von Träger 1 über einen lokalen Zugang zum öffentlichen Internet 5 geroutet, Verkehr vom Träger 2 zu einem externen Zugang 6 z.B. einen privaten Eingangsserver eines Firmennetzwerkes.

Als Nachteile des Standes der Technik gemäß heutigem Vorgehen sind zu nennen:
■ Das Endgerät braucht für jede Verbindung, die in ein separates Netz geht, einen eigenen Kontext mit spezifischer IP Adresse.
■ Die Routing-Entscheidung muss bereits im Endgerät getroffen werden.
■ Die Komplexität im Endgerät ist entsprechend hoch. Sollte nun auf beiden Verbindungen jeweils dieselbe Anwendung (Applikation) ausgeführt werden, kann es zu Konflikten kommen.
■ Das mobile Netz hat nur limitierte Kontrolle über die Routing-Entscheidung der einzelnen Pakete. Bestenfalls kann es entscheiden, ob ein Paket auf dem vom Endgerät genutzten Kontext zulässig ist.

WO 03/067832 A1 offenbart ein Verfahren zum Routen von Verkehrsströmen in IP-Netzen, insbesondere in mobilen IP-Netzen, wobei ein zu übertragender Verkehrsstrom und die zugehörigen Signalisierungsdaten so geroutet werden, dass sie in einem Träger oder Kontext übertragen werden. Es ist ferner beschrieben, mehrere Verkehrsströme für unterschiedliche Anforderungen an die Übertragungsqualität des jeweiligen Verkehrsstroms, zusammenzuleiten, wobei die Übertragung der Verkehrsströme unabhängig davon erfolgt, ob sie hinsichtlich der Übertragungsqualität unterschieden werden müssen. Eine Übertragung von unterschiedlichen Verkehrsströmen über einen PDP Kontext ist erwähnt aber nicht weiter ausgeführt.

Ausgehend von diesem Stand der Technik liegt der Erfindung die Aufgabe zugrunde, ein Verfahren mit neuen Regeln und Filterkriterien zum Routen und Filtern von Verkehrsströmen in IP-Netzen, insbesondere in mobilen IP-Netzen und ein Computerprogramm zur Durchführung der neuen Regeln und Filterkriterien anzugeben, bei dem auch mehrere Verkehrsströme für unterschiedliche Zielnetze berücksichtigt werden können.

Diese Aufgabe wird durch das in Patentanspruch 1 beanspruchte Verfahren gelöst. Dieses Verfahren ist dadurch gekennzeichnet, dass mehrere zu übertragende Verkehrsströme für unterschiedliche Zielnetze zusammengeleitet und über den einen Träger oder Kontext übertragen werden, wobei die

Übertragung der Verkehrsströme unabhängig davon erfolgt, ob sie hinsichtlich des Zielnetzes unterschieden werden müssen.

Die Übertragung der Verkehrsströme erfolgt dabei unabhängig davon, ob sie hinsichtlich Zielnetz und/oder QoS unterschieden werden müssen.
Die Übertragung in einem Träger/Kontext erfolgt insbesondere auf der Luftschnittstelle vom Endgerät zu einem Netzzugangspunkt.

Des Weiteren wird erfindungsgemäß vorgeschlagen, dass der lokale Netzzugangsknoten des Netzes die Verkehrsströme anhand von Regeln und Filterkriterien ans korrekte Ziel routet. Regeln ("Policy") & Filterkriterien können statisch oder dynamisch bzw. im jeweiligen Netz od. von einem anderen Netz konfiguriert sein.

Vorteilhafte Ausgestaltungen der Erfindung sind in den Unteransprüchen angegeben.

Die oben genannte Aufgabe wird weiterhin durch ein Computerprogramm mit einem Programmcode zum Durchführen des beanspruchten Verfahrens gelöst. Die Vorteile dieser Lösung entsprechen den oben mit Bezug auf das beanspruchte Verfahren genannten Vorteilen.

Vorteile der Erfindung sind, stichwortartig aufgezählt, folgende:
■ Volle (flexible) Netzkontrolle bei Routing-Entscheidungen, basierend auf konfigurierten Regeln (Policy-) & Filterkriterien
■ Das Endgerät bekommt nur eine IP Adresse zugewiesen.
■ Unnötige Komplexität im Endgerät wird vermieden. Das Endgerät muss keine Unterscheidung machen hinsichtlich des Zielnetzes / Routings, dadurch wird die Komplexität im Endgerät (Hardware / Software) erheblich vermindert
■ Die Möglichkeit, dass das Endgerät bei der Entscheidung über QoS(Quality of Service) und/oder Zielnetz und/oder Routing mitwirkt bzw. seine Präferenzen äußert, ist nach wie vor gegeben.
■ Das Verfahren arbeitet einheitlich sowohl in Netzen mit der Möglichkeit mehrerer Kontexte pro Endgerät (z.B. GPRS) als auch in Netzen, die Mehrfachkontexte pro Endgerät nicht unterstützen (z.B. WLAN).

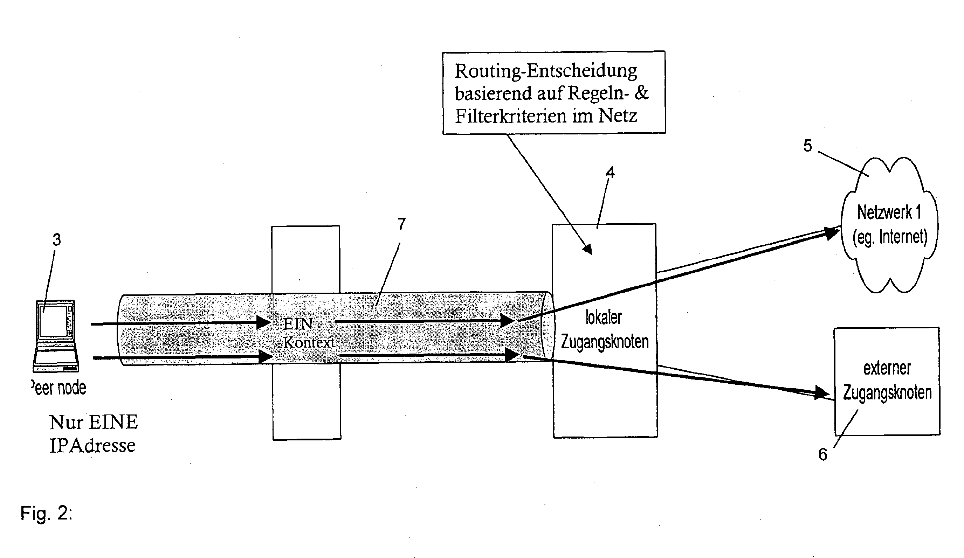

Die Erfindung wird in Fig. 2 schematisch dargestellt und wird nachfolgend beschrieben:
Ausgehend vom Endgerät 3 (Peer Node) wird im Gegensatz zum herkömmlichen Verfahren gemäß Figur 1 nur eine einzige IP-Adresse verwendet um unterschiedliche Daten zum IP-Netz übertragen zu können. Der Datenstrom bestehend aus mehreren unterschiedlichen Verkehrsströmen wird in einem einzigen Kontext/Träger 7 zu einem lokalen Zugangsknoten 4 geführt. Dort erfolgt dann anhand von hinterlegten Regeln und Filterkriterien, die z.B. in einer Speichereinrichtung gespeichert sind, für spezifische Teile des Datenstroms eine gezielte Zuleitung zu einem von ggf. mehreren Netzknoten eines ersten Netzwerks 5. Andere Teile des Datenstroms werden auf Basis der hinterlegten Regeln und Kriterien auch zu externen Zugangsknoten 6 gelenkt.

Die im Netz hinterlegten Regeln und Kriterien zum Routen der einzelnen Verkehrsströme können umfassen:
- Informationen im IP-Header
- Informationen im Applikations-Header
- Kriterien zur QoS-Behandlung
- die Dateninhalte (User-Daten)
- verwendete Protokolle

Grundsätzlich ist die Anzahl der Zielnetzwerke gemäß der Erfindung nicht beschränkt.

Schließlich sei darauf hingewiesen, dass alle in der Beschreibung offenbarten Einzelaspekte der Erfindung - soweit sinnvoll - auch über die einzelnen Beispiele hinweg miteinander kombiniert werden können.

## Patentansprüche

1. Verfahren zum Routen von Verkehrsströmen in IP-Netzen, insbesondere in mobilen IP-Netzen, wobei mehrere zu übertragende Verkehrsströme so geroutet werden, dass sie in einem Träger oder Kontext (7) übertragen werden, **dadurch gekennzeichnet,**
**dass** mehrere Verkehrsströme für unterschiedliche Zielnetze (5; 6) zusammengeleitet und über den einen Träger oder Kontext (7) übertragen werden, wobei die Übertragung der Verkehrsströme unabhängig davon erfolgt, ob sie hinsichtlich Zielnetz unterschieden werden müssen.

2. Verfahren nach Anspruch 1, **dadurch gekennzeichnet, dass** mehrere Verkehrsströme für unterschiedliche Anforderungen an die Übertragungsqualität des jeweiligen Verkehrsstroms, Quality of Service, zusammengeleitet und über den einen Träger oder Kontext (7) übertragen werden.

3. Verfahren nach Anspruch 1, **dadurch gekennzeichnet, dass** mehrere Verkehrsströme für unterschiedliche Anforderungen an die Übertragungsqualität des jeweiligen Verkehrsstroms, Quality of Service, zusammengeleitet und von einem Endgerät (3) über den einen Träger oder Kontext (7) an einen Netzzugangsknoten (4) des IP-Netzes übertragen werden.

4. Verfahren nach einem der vorangehenden Ansprüche, **dadurch gekennzeichnet, dass** mehrere dass die Übertragung der Verkehrsströme vom Endgerät (3) an den Netzzugangsknoten (4) über eine Luftschnittstelle erfolgt.

5. Verfahren nach einem der vorangehenden Ansprüche, **dadurch gekennzeichnet, dass** Regeln und Filterkriterien zu Steuerung eines lokalen Netzzugangsknotens (4) des IP-Netzes statisch oder dynamisch, vom eigenen Netz oder von einem anderen Netz konfiguriert sind.

6. Verfahren nach Anspruch 5, **dadurch gekennzeichnet, dass** die Regeln und Filterkriterien zu Steuerung eines lokalen Netzzugangsknotens (4) im Zugangsnetzknoten gespeichert sind.

7. Verfahren nach einem der vorangehenden Ansprüche, **dadurch gekennzeichnet, dass** die Anzahl der zusammen gerouteten Verkehrsströme nicht beschränkt ist.

8. Computerprogramm zur Durchführung des Verfahrens nach einem der vorgenannten Ansprüche 1 bis 7.

## Claims

1. Method for routing traffic streams in IP networks, in particular in mobile IP networks, wherein several traffic streams to be transmitted are routed so that they are transmitted in a carrier or context (7), **characterised in that** several traffic streams for different destination networks (5; 6) are merged and transmitted via the one carrier or context (7), wherein the transmission of the traffic streams is effected independently of whether they have to be differentiated with regard to destination network.

2. Method according to claim 1, **characterised in that** several traffic streams for different requirements of transmission quality of the particular traffic stream, Quality of Service, are merged and transmitted via the one carrier or context (7).

3. Method according to claim 1, **characterised in that** several traffic streams for different requirements of transmission quality of the particular traffic stream, Quality of Service, are merged and transmitted from a terminal (3) via the one carrier or context (7) to a network access node (4) of the IP network.

4. Method according to one of the preceding claims, **characterised in that** several that the transmission of the traffic streams from the terminal (3) to the network access node (4) is effected via an air interface.

5. Method according to one of the preceding claims, **characterised in that** rules and filter criteria for controlling a local network access node (4) of the IP network are configured statically or dynamically by the particular network or another network.

6. Method according to claim 5, **characterised in that** the rules and filter criteria for controlling a local network access node (4) are stored in the access network node.

7. Method according to one of the preceding claims, **characterised in that** the number of traffic streams routed together is not restricted.

8. Computer program for carrying out the method according to one of the aforementioned claims 1 to 7.

## Revendications

1. Procédé pour le routage de flux de trafic dans des réseaux IP, en particulier dans des réseaux IP mobiles, étant précisé que plusieurs flux de trafic à transmettre sont routés de manière à être transmis dans un support ou contexte (7),
**caractérisé en ce que** plusieurs flux de trafic pour des réseaux cibles (5 ; 6) différents sont réunis et sont transmis par l'intermédiaire du même support ou contexte (7), étant précisé que la transmission des flux de trafic se fait indépendamment du fait qu'ils doivent ou non être différenciés en matière de réseau cible.

2. Procédé selon la revendication 1, **caractérisé en ce que** plusieurs flux de trafic pour différentes exigences de qualité de transmission du flux de trafic respectif, Quality of Service, sont réunis et sont transmis par l'intermédiaire du même support ou contexte (7).

3. Procédé selon la revendication 1, **caractérisé en ce que** plusieurs flux de trafic pour différentes exigences de qualité de transmission du flux de trafic respectif, Quality of Service, sont réunis et sont transmis par un terminal (3) à un noeud d'accès au réseau (4) du réseau IP par l'intermédiaire du même support ou contexte (7).

4. Procédé selon l'une des revendications précédentes, **caractérisé en ce que** la transmission des flux de trafic par le terminal (3) au noeud d'accès au réseau (4) se fait par l'intermédiaire d'une interface air.

5. Procédé selon l'une des revendications précédentes, **caractérisé en ce que** des règles et critères de filtrage pour la commande d'un noeud local d'accès (4) du réseau IP sont configurés de manière statique ou dynamique par le propre réseau ou par un autre réseau.

6. Procédé selon la revendication 5, **caractérisé en ce que** les règles et critères de filtrage pour la commande d'un noeud d'accès au réseau (4) sont mémorisés dans le noeud de réseau d'accès.

7. Procédé selon l'une des revendications précédentes, **caractérisé en ce que** le nombre de flux de trafic routés ensemble n'est pas limité.

8. Programme informatique pour la mise en oeuvre du procédé selon l'une des revendications 1 à 7 ci-dessus.
